# EUROPEAN PATENT SPECIFICATION

(11) **EP 2 930 861 B1**
(45) Date of publication and mention of the grant of the patent: **08.08.2018**
(21) Application number: 15162522.5
(22) Date of filing: 07.04.2015
(51) Int. Cl.: H04B 7/155, H04B 7/26

(54) **RADIO REPEATER**
FUNK-REPEATER
RÉPÉTEUR RADIO

(30) Priority: 09.04.2014 FI 20145339
(43) Date of publication of application: 14.10.2015
(73) Proprietor: OTA Systems Oy, 90250 Oulu (FI)
(72) Inventor: Erola, Timo, 90250 Oulu (FI)
(74) Representative: Kolster Oy Ab

(56) References cited:
- EP-A2- 0 401 974
- US-A- 4 479 245
- US-A1- 2004 114 631

## Description

### Field

The invention relates to a radio repeater and a computer program code. In an example embodiment, the invention may be used for retransmitting a radio signal transmitted by a tracking device attached to an animal.

### Background

Radio repeaters may be used for improving radio coverage in shadow areas. Known radio repeaters are complex devices, which are difficult to configure and operate. For instance, WO 94/23504 describes a radio repeater requiring synchronisation data in radio signals, and US 2006/0034183 describes a radio repeater requiring packet acknowledgements to implement retransmissions by using delay, which is based on the quality of a channel and the number of nodes that have not yet received a packet. For this reason, a radio repeater is needed, which is simpler and by which it is easier to implement an ad hoc repeater network. US 4,479,245 discloses a same frequency repeater for a multiple repeater system, wherein simulcast distortion is avoided by allowing only one repeater to rebroadcast the radio signal. EP 0 401 974 discloses a radio transmission system comprising a central receiver, at least one transmitter remote from the receiver and a plurality of repeaters arranged in zones around the receiver.

### Brief description

An object of the invention is to provide an improved radio repeater and an improved computer program code.

As an aspect of the invention, a radio repeater according to claim 1 is provided.

As a second aspect of the invention, a computer program code according to claim 17 stored on a computer-readable storage medium is provided.

By means of the invention, the implementation of an ad hoc repeater network is simpler than before.

### List of figures

Embodiments of the invention will be described below by way of example, referring to the attached drawings, of which:
Figure 1 is an example embodiment of a repeater network formed by radio repeaters;
Figure 2 is a simplified example embodiment of a radio repeater; and
Figures 3, 4, 5 and 6 are flow charts illustrating example embodiments of the operation of a radio repeater.

### Description of embodiments

In the following, different embodiments will be described with reference to the above figures. However, the invention is not restricted to the disclosed embodiments but the presented solutions are examples of feasible implementation manners. Features of various embodiments may also be combined unless they are specifically conflicting or alternative with regard to their technical implementation.

The figures present only some elements, the implementation of which may deviate from what is shown. Therefore, it is to be understood that the apparatuses may also comprise other parts. However, such other parts may be irrelevant in regard of the actual invention, and thus there is no need to discuss them in greater detail here. Further, it is to be noted that although the elements are described as being separate, some of them may be integrated into one physical element, i.e. the elements described may be logical elements.

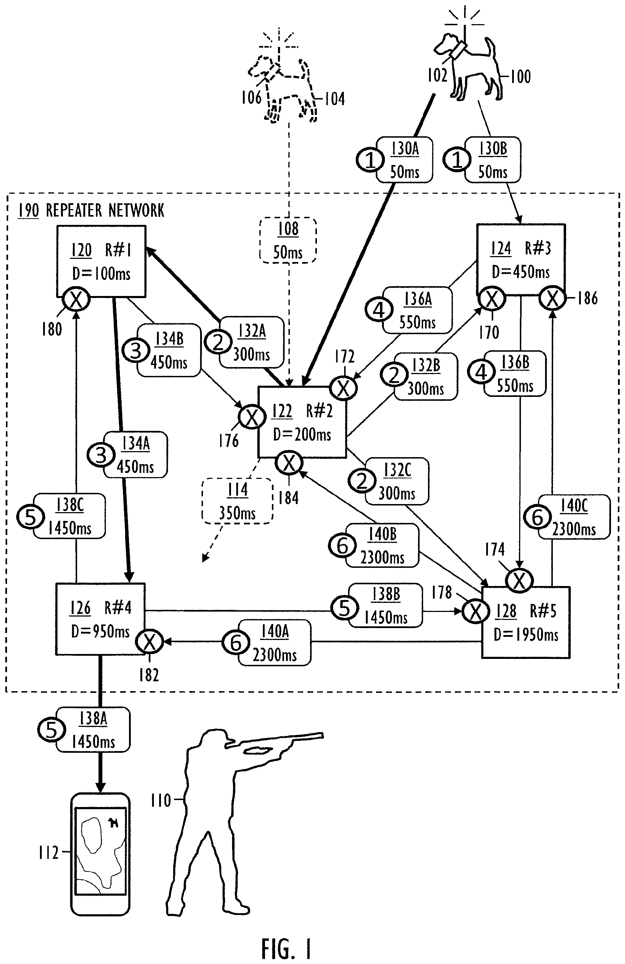

Figure 1 describes feasible parts of the system: a source device 102, radio repeaters 120, 122, 124, 126, 128 forming a repeater network 190, and a terminal 112 to be operated by a user.

In an example embodiment, the radio repeaters 120, 122, 124, 126, 128 of the radio network 190 are within the same coverage area. In an example embodiment, the radio repeaters 120, 122, 124, 126, 128 of the radio network 190 are not all within the same coverage area, but the coverage areas are partly overlapping and partly adjacent to one another.

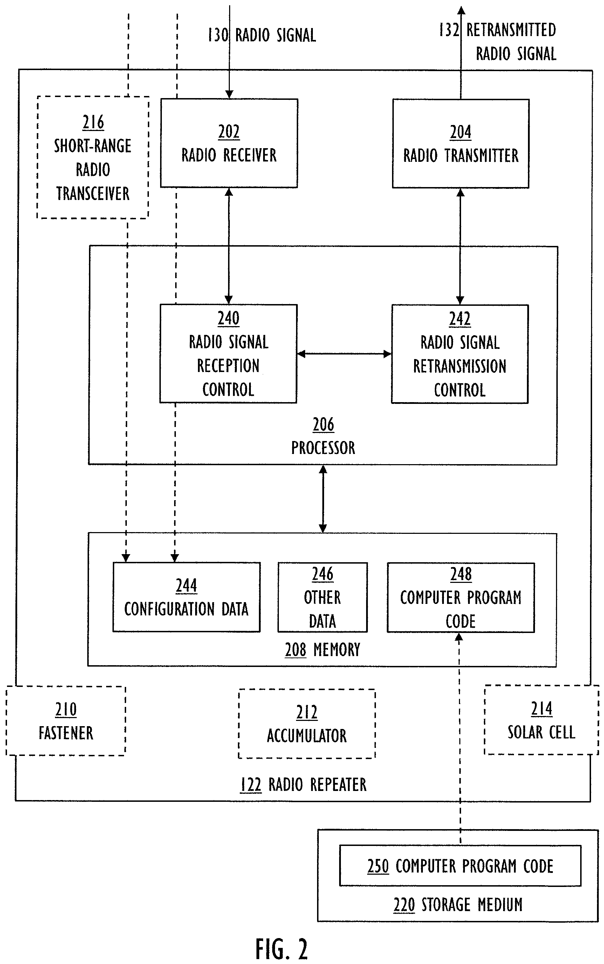

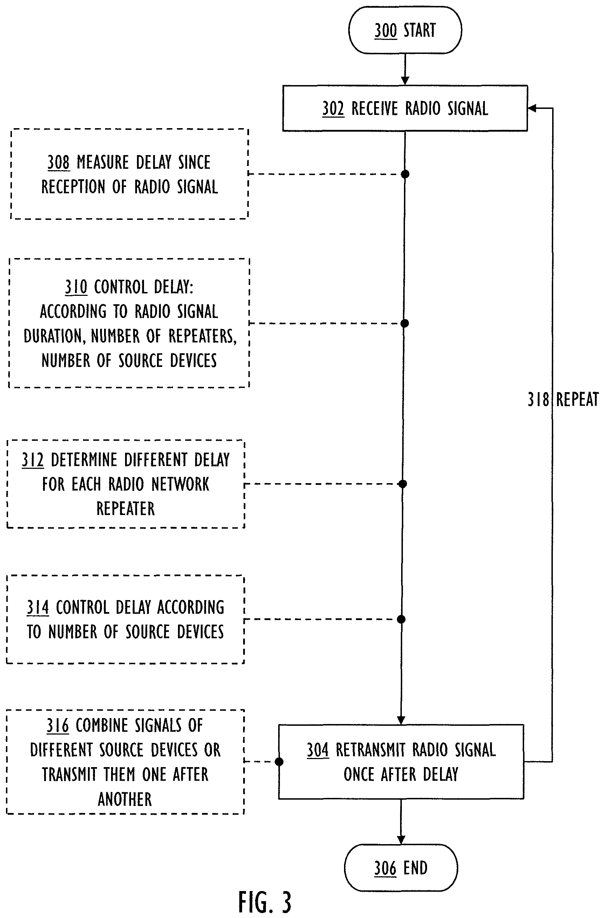

Figures 2 and 3 describe example embodiments of the radio repeater 122. The radio repeater 122 comprises a radio receiver 202 for receiving 302 a radio signal 130 and a radio transmitter 204 for retransmitting 304 the received radio signal 130 as a retransmitted radio signal 132.

The radio repeater 122 also comprises at least one processor 206 and at least one memory 208, in which at least one memory 208 a computer program code 248 is stored.

The processor 206 and the memory 208 may be implemented by suitable electronics, such as logic components, standard integrated circuits, application-specific integrated circuits (ASIC), systems-on-a-chip (SoC), digital signal processors, microprocessors, microcontrollers, FPGAs (Field Programmable Gate Array) and other suitable electronic structures. The radio repeater 122 may include an electronic digital computer, which may comprise a random-access memory (RAM), a central processing unit (CPU) and a system clock. The central processing unit may comprise a number of registers, an arithmetic logic unit (ALU) and a control unit. The control unit is controlled by a sequence defined by the computer program code 248, which has been transferred to the central processing unit from the random-access memory. The central processing unit may include a number of micro commands for basic operations. Implementation of the micro commands may vary depending on the design of the central processing unit. The computer program code 248 may be encoded in a programming language, which may be a high-level programming language, such as C or Java, or a lower-level programming language, such as a machine language or an assembler. The computer may also have an operating system, which may provide system services for the computer program code 248. There may be three different types of buses between the random-access memory and the central processing unit: a data bus, a control bus and an address bus. The control unit uses the control bus for setting the random-access memory to two modes: the first mode for writing data in the random-access memory and the second mode for reading data from the random-access memory. The control unit uses the address bus to send address signals to the random-access memory, which indicate certain points of the memory in the read and write modes. The data bus is used for transferring data from the random-access memory to the central processing unit and vice versa, and for transferring computer program code 248 from the random-access memory to the central processing unit. The random-access memory may be implemented as a main memory, where information is lost when the power is switched off. The radio repeater 122 may also comprise a non-volatile memory, which keeps the information even if the power were switched off. The non-volatile memory may be implemented as, for example, a flash memory or a solid-state drive (SSD), or information may be stored permanently in some other suitable manner (such as by semiconductor technology). Data 246 and the computer program code 248 may be stored in the non-volatile memory.

The computer program 248 may be structured in different ways; for instance, the code may be divided into functional modules, subroutines, methods, classes, objects, applets, macros, etc., depending on the software design methodology and programming language used. The programming environment may include program libraries, which are collections of ready-made functions and can be used in the program for performing various standard operations.

In an example embodiment, the processor 206 shown in Figure 2, as well as its memory 208, may be implemented as a microcontroller, which may be Microchip's PIC18F2550, for example. It is also possible to use EEPROM (Electrically Erasable Programmable Read-Only Memory), such as Microchip's 24LC256T, as a non-volatile memory for storing settings. The radio receiver 202 and the radio transmitter 204 may be implemented by Silicon Labs' transceiver circuit SI4432, which is a highly integrated circuit that processes, such as modulates, a data packet to be transmitted, controls the power amplifier, demodulates and filters a received signal and processes packets.

The computer program code 248, 250 may be stored in a computer-readable storage medium 220. The computer program code 248, 250 may be provided for the radio repeater 122 by a suitable storage medium 220 (such as an USB memory using a flash memory for storage) or by means of a data connection. In an example embodiment, the storage medium 220 is non-transitory. In an example embodiment, the computer program code 248, 250, when executed in an apparatus, causes the apparatus to operate according to the example embodiments described.

When the computer program code 248 is performed by at least one processor 206, it causes the radio repeater 122 to receive 302 a radio signal 130A, 134B, 136A, 140B derived from a source device 102, either transmitted directly by the source device 102 or retransmitted by another radio repeater 120, 124, 128, and to retransmit 304 the received radio signal 130A as a retransmitted radio signal 132A, 132B, 132C not more than once after a predetermined delay.

In accordance with Figure 3, the process is started at 300 and ended at 306. The reception 302 and retransmission 304 may be repeated 318 as long as desired, for instance, as long as the radio repeater 122 is in operation.

Figure 1 illustrates how a radio signal transmitted by the source device 102 propagates along the repeater network 190 at six different stages 1 to 6 and, in fact, reaches the terminal 112 already at the fifth stage.

In the example embodiment of Figure 1 it is assumed that the length of the radio signal is 50 milliseconds. Time information in connection with the radio signal indicates when the transmission of the signal has ended. In practice, it also indicates the time when the reception of the radio signal has ended in the radio repeater, because the radio signal propagates at the speed of light.

In an example embodiment, the radio repeater 122 also comprises a computer program code 248 which, when executed with at least one processor 206, causes the radio repeater 122 also to measure 308 the predetermined delay since the reception of the radio signal 130A.

In an example embodiment, the radio repeater 122 also comprises a computer program code 248 which, when executed with at least one processor 206, causes the radio repeater 122 also to control 310 the predetermined delay on the basis of at least one of the following: duration of the radio signal 130A, 132A, 132B, 132C, number of radio repeaters 120, 122, 124, 126, 128 in the repeater network 190, number of source devices 102, 106. Controlling may take place in connection with the configuration of the radio repeater 122 before or during use. The user may carry out the controlling by performing settings, or the controlling may be dynamically determined by the radio repeater 122 by means of parameters defined in the radio repeater 122. The delay and/or parameters may also be transmitted in a radio signal between the radio repeaters 120, 122, 124, 126, 128.

Each radio repeater has its own predetermined delay: delay in a radio repeater R#1 120 is 100 ms, in a radio repeater R#2 122 it is 200 ms, in a radio repeater R#3 124 it is 450 ms, in a radio repeater R#4 126 it is 950 ms, and in a radio repeater R#5 128 it is 1950 ms.

For the sake of clarity, radio signals are described in Figure 1 as separate signals to indicate how they are received in different radio repeaters, letters A, B and C being used after the reference numbers, if necessary. However, they naturally refer to one and the same radio signal transmitted. For instance, when the source device transmits the first radio signal 130 at stage 1, the radio repeaters R#2 122 and R#3 124 receive it as radio signals 130A and 130B.

At stage 2, the radio repeater R#2 122 transmits the radio signal 132A, 132B, 132C. The transmission ends at the moment 300 ms, calculated from the moment 0 when the source device 102 started to transmit the radio signal 130, in other words, the duration of the radio signal 130 transmitted by the source device 102, i.e. 50 ms, a predetermined delay of the radio repeater R#2 122, i.e. 200 ms, and the duration of the radio signal 132 transmitted by the radio repeater R#2 122, i.e. 50 ms, are added together: 50 ms + 200 ms + 50 ms = 300 ms.

At stage 3, the radio repeater R#1 120 transmits a radio signal 134A, 134B, the transmission of which ends at the moment 450 ms.

At stage 4, the radio repeater R#3 124 transmits a radio signal 136A, 136B, the transmission of which ends at the moment 550 ms.

At stage 5, the radio repeater R#4 126 transmits a radio signal 138A, 138B, 138C, the transmission of which ends at the moment 1450 ms.

Finally at stage 6, the radio repeater R#5 128 transmits a radio signal 140A, 140B, 140C, the transmission of which ends at the moment 2300 ms.

As can be seen from the transmission times, none of the radio repeaters 120, 122, 124, 126, 128 retransmits with another repeater at the same moment. This has been achieved by suitably selecting a predetermined delay for each radio repeater 120, 122, 124, 126, 128.

In an example embodiment, the predetermined delays are selected for the radio repeaters 120, 122, 124, 126, 128 of the same repeater network 190 in such a manner that the combined duration time of delays and radio signals is shorter than the transmission interval of the source device 102, which means that retransmission of the radio signal ends before the next radio signal is transmitted from the source device 102. In the example embodiment of Figure 1 it may be assumed that the transmission interval of the source device 120 is five seconds and, as Figure 1 shows, the last retransmissions 140A, 140B, 140C already end when 2.3 seconds have passed since the source device 102 transmitted the radio signal 130.

In an example embodiment, the radio repeater 122 also comprises a computer program code 248 which, when executed with at least one processor 206, causes the radio repeater 122 also to determine 312 the predetermined delay in such a manner that it is different for each radio repeater 120, 122, 124, 126, 128 belonging to the same repeater network 190, and to retransmit 304 the received radio signal 130 as a radio signal 132A, 132B, 132C retransmitted only once after the predetermined delay. In the example embodiment of Figure 1, these delays are determined as follows: 100 ms, 200 ms, 450 ms, 950 ms, and 1950 ms, but it is clear that depending on, for instance, the size of the repeater network 190, the transmission interval of the source device 102, and the length of the radio signal 130 transmitted by the source device 102, delays can be determined in various ways to ensure the optimal operation of the repeater network 190.

In an example embodiment, the radio repeater 122 also comprises a computer program code 248 which, when executed with at least one processor 206, causes the radio repeater 122 also to receive 302 a radio signal 130A and to retransmit 304 the retransmitted radio signal by using the same radio channel for both signals. When predetermined delays have been suitably selected in accordance with the above, it is efficient to use the same channel because retransmissions do not overlap and no interference occurs in the radio channel used. The radio channel may be defined here as a certain frequency band, for example.

In an example embodiment, the radio repeater 122 also comprises a computer program code 248 which, when executed with at least one processor 206, causes the radio repeater 122 also to control 314 the predetermined delay in such a manner that, when more than one source device 102, 106 transmits a radio signal 108, 130A, 130B, the received radio signal 108, 130A is retransmitted 304 as the retransmitted radio signal 114, 132A, 132B, 132C not more than once so that a transmission duty ratio allowed for the radio repeater 122 is not exceeded. The highest allowable transmission duty ratio may be defined as 10%, for example, which means that the radio repeater 122 may not transmit more than one transmission burst of 100 milliseconds once in a second or, for instance, two transmission bursts of 50 milliseconds in a second. It is to be noted that in this example embodiment retransmission is performed not more than once, meaning that a retransmission need not necessarily be performed at all so that the transmission duty ratio will not be exceeded. In practice this means that, of the radio signals 108, 130A waiting for retransmission, for instance, only the newest ones may be retransmitted and some radio signals are not retransmitted at all. For example: of the radio signals transmitted by the source device 102, 106, every second or every third signal occasionally disappears, but it does not really matter because some of the radio signals still reach their destination and not all signals get lost on the way, which would happen if there were no repeater network 190 at all and the terminal 112 were outside the radio coverage of the source device 102.

In an example embodiment, the radio repeater 122 also comprises a computer program code 248 which, when executed with at least one processor 206, causes the radio repeater 122 also to retransmit 304 the radio signals 130A, 108 last received from each source device 102, 106 as retransmitted radio signals 132A, 114 one after another, and then to keep a break in retransmission, which is so long that the transmission duty ratio allowed for the radio repeater 122 is not exceeded. For example, if the duty ratio is 10% and the length of the transmission burst 100 ms, the radio repeater 122 may retransmit the radio signals 130A, 100 received from two source devices 102, 106 one after another, which takes 200 milliseconds, and then keep a break of 1.8 seconds before the next retransmission, producing a duty ratio of (200 ms / 2 s) % = 10%.

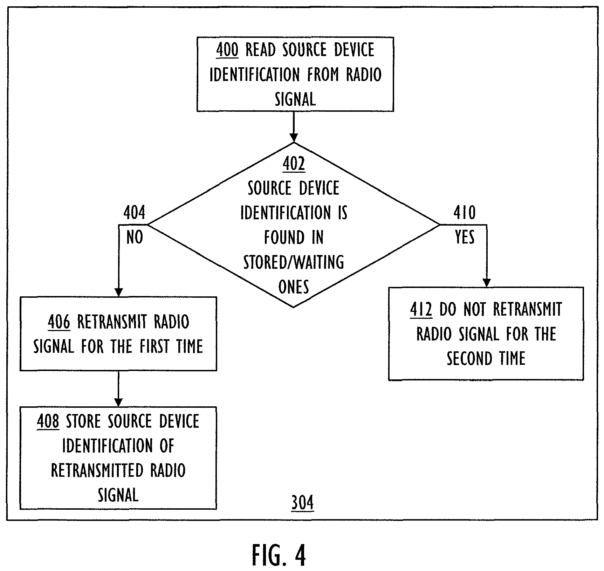

In an example embodiment of Figure 4, the radio repeater 122 also comprises a computer program code 248 which, when executed with at least one processor 206, causes the radio repeater 122 also to read 400 from the received radio signal 130A a source device identification tagged thereto by the source device 102, and if the source device identification read from the received radio signal 130A is not found among either the stored source device identifications or the source device identifications 402 & 404 of the radio signals waiting to be retransmitted, to retransmit 406 the received radio signal 130A as the retransmitted radio signal 132A, 132B, 132C for the first time, and to store 408 the source device identification of the retransmitted radio signal 132A, 132B, 132C, or if the source device identification read from the received radio signal 130A is found among either the stored source device identifications or the source device identifications 402 & 410 of the radio signals waiting to be retransmitted, not to retransmit 412 the received radio signal 130A for the second time and not to set the received radio signal 130A to wait for retransmission for the second time.

In an example embodiment, the source device identification comprises a source device identification part distinguishing the source devices 102, 106 from one another and a radio signal identification part distinguishing the radio signals of a specific source device from one another. The source device identification part may be a serial number, for instance: with 24 bits, it is possible to achieve 16777216 different values, for example. The radio signal identification part may be a running number or a time stamp (of the transmission moment), for instance. The running number may be an integer starting from zero or one: for instance, a number having a length of 16 bits has 65536 consecutive values, and if it is assumed that the source device 102 transmits a radio signal every fifth second, there are enough running numbers for (((65536 * 5) / 60) / 60) = 91 hours. If necessary, the running number may be longer or the running number restarts from the beginning after having achieved its highest value. The source device 102 may also adjust the running number to zero and start from the beginning if, for instance, the source device 102 is restarted when a new battery 212 is placed therein. If the source device 102 starts the running number from the beginning, the radio signal 130 it has transmitted may include an information field informing the radio repeaters 120, 122, 124, 126, 128 that the running number starts from the beginning. The time stamp may include, for instance, a time and possibly a date, which are obtained from a clock in the source device 102, for example, or the source device 102 may obtain the information needed for the time stamp from an external reference, such as a signal it has received from a satellite navigation system.

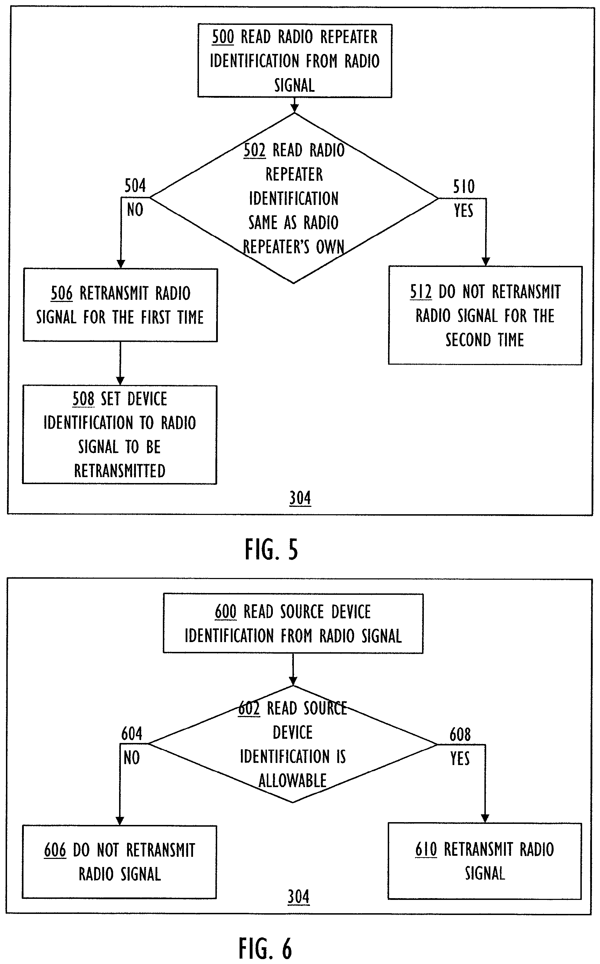

In an example embodiment of Figure 5, the radio repeater 122 also comprises a computer program code 248 which, when executed with at least one processor 206, causes the radio repeater 122 also to read 500 possible radio repeater identifications from the received radio signal 130A, and if the received radio signal 130A does not yet have a radio repeater identification 502 & 504 of the radio repeater 122 receiving the radio signal, to retransmit 506 the received radio signal 130A as the retransmitted radio signal 132A, 132B, 132C for the first time, and to set to the radio signal 132A, 132B, 132C to be retransmitted a radio repeater identification identifying the radio repeater 122, as is illustrated in the example embodiment of Figure 1 with the radio repeater R#2 122. If the received radio signal already has a radio repeater identification 502 & 510 of the radio repeater 122 receiving the radio signal, the received radio signal is not retransmitted 512 for the second time, as the radio repeater R#2 122 does with the radio signal 136A received from the radio repeater R#3 124 in the example embodiment of Figure 1. In a simple repeater network 190, a few bits are sufficient to determine a radio repeater identification; in the example embodiment of Figure 1, for example, the radio repeaters 120, 122, 124, 126, 128 can be numbered with three bits (= eight different values) to distinguish them from one another.

In the example embodiment of Figure 1, the symbol 170, 172, 174, 178, 180, 182 (letter X inside a circle) illustrates the situation in which the received radio signal has already been retransmitted or is waiting for retransmission, as a result of which the received radio signal in question need not be retransmitted for the second time.

In an example embodiment of Figure 6, the radio repeater 122 also comprises a computer program code 248 which, when executed with at least one processor 206, causes the radio repeater 122 also to read 600 from the received radio signal 130A a source device identification tagged thereto by the source device 102, and if the read source device identification is found among allowable source device identifications 602 & 608, to retransmit 610 the received radio signal 130A as the retransmitted radio signal 132A, 132B, 132C not more than once after the predetermined delay, or if the read source device identification is not found among allowable source device identifications 602 & 604, not to retransmit 606 the received radio signal. The administrator of the repeater network 190 may thus control that only the authorized source devices 102 are supported. For instance, by paying a utilization or membership fee to the administrator, the owner of the source device 102 receives the right to use the repeater network 190.

It is also possible that more than one radio signal 138A reaches the portable device 112. In an example embodiment, the portable device 112 does not take into account the radio signals including the source device identification of the radio signal that was already received earlier.

In an example embodiment described in Figure 2, the radio repeater 122 also comprises a computer program code 248 which, when executed with at least one processor 206, causes the radio repeater 122 also to receive and store configuration data 244 of the radio repeater 122 by either the radio receiver 202 or a short-range radio transceiver 216 comprised by the radio repeater 122, the configuration data 244 comprising at least one of the following: the predetermined delay for the radio repeater 122, a radio repeater identification identifying the radio repeater 122, allowable source device identifications 102, 106. Thus, the configuration becomes easier because it can be carried out without a physical contact with the radio repeater 122, which may be located high beyond the user's reach, for instance.

In an example embodiment of Figure 2, the radio repeater 122 also comprises at least one of the following: an accumulator 212, in which electric power required by the radio repeater 122 is stored, a solar cell 214 generating electric power required by the radio repeater 122, a fastener 210, by which the radio repeater 122 can be fastened to a high point in the terrain, and/or a casing protecting the radio repeater 122 against humidity.

The accumulator 212 may be implemented by any suitable manner for storing electric power. In an example embodiment, the accumulator 212 is implemented by a disposable or rechargeable battery, which converts electric power into chemical energy during charging and vice versa during discharging.

In an example embodiment, the fastener 214 may be, for example, a fastening strap, hook, clamp or other mechanical means, by which the radio repeater 122 may be fastened to a high point in the terrain, such as a tree, stone, rock, utility pole, building (hunting cabin or house, etc.) or other place located higher than the surrounding terrain, so that the radio coverage of the radio repeater 122 can be made as wide as desired or as wide as possible.

In an example embodiment, the casing is made of a waterproof material, such as cloth or film. The casing may protect the radio repeater 122 not only from humidity but also from blows. The most complex form of casing is made of a stiff material, such as plastic or metal. In an example embodiment, the fastener 210 and the casing may be integrated into the same structure.

The radio repeater 122 may naturally also comprise other structural parts, which are not described herein. It may comprise, for instance, an external radio antenna or an antenna coupling for increasing the range, and/or a power supply connection for receiving electric power from a suitable external source, such as mains current or a generator.

So far, only a case where the region of the repeater network 190 comprises one source device 102 has been discussed for the sake of clarity. However, there may also be more than one source device 102, 106, as is described in Figure 1.

In an example embodiment, the radio repeater 122 also comprises a computer program code 248 which, when executed with at least one processor 206, causes the radio repeater 122, if radio signals 108, 130A have been received from more than one source device 102, 106, also to combine 316 the different radio signals 108, 130A into one radio signal to be retransmitted or to transmit the different radio signals one after another after the predetermined delay.

In principle, the above radio repeater 122 may be used for receiving and retransmitting radio signals containing all kinds of data. However, it is to be noted that the radio repeater 122 performs the retransmission after the predetermined delay. Therefore, the radio repeater 122 is best suited for retransmission of delay-tolerant data. For example, it is not desirable to add delays to a normal call between two persons.

In an example embodiment, the radio repeater is used in a system where a person 110 follows the information transmitted by a tracking device 102 attached to an animal 100 on his/her portable device 112. The tracking device 102 to be attached to an animal 100 is also known as a tracking collar or a dog tracker, if the animal is a hunting dog. In an example embodiment described in Figure 1, the source device thus comprises at least one of the following: a tracking device 102 to be attached to an animal 100, a portable device 112 carried by a hunter 110. Radio signals usually propagate from the tracking device 102 to the portable device 112, but in certain situations radio signals may also be transmitted from the portable device 112 to the tracking device 102, for instance when configuration data or commands need to be sent to the tracking device 102.

The animal 100, to which the tracking device 102 is attached, may be a hunting dog used as help in hunting in such a manner that the dog moves freely in the terrain, looking for game. At intervals, the tracking device 102 determines the location information indicating the location of the dog and transmits it via a radio connection to the portable device 112 of the hunter 110. In this way, the hunter 110 may monitor how the hunting dog 102 moves in the forest without an eye or hearing contact.

The tracking device 102 may be attached to the hunting dog 100 in different ways, such as by placing it to the collar or vest the dog wears. The tracking device 102 has a proper (waterproof) cover protecting sensitive electronics from humidity, dirt, and effects of blows and vibration. The electronics of the tracking device 102 receives its power from an accumulator (for instance, disposable or rechargeable batteries), in which electric power required by the tracking device 102 is stored.

The tracking device 102 may comprise a positioning radio receiver for producing positioning data indicating the geographical location of the animal. The positioning radio receiver may be implemented in any suitable manner. In an example embodiment, the positioning radio receiver acts as a receiver in a global navigation satellite system (GNSS). Global navigation satellite systems that already exist or are under development include GPS (Global Positioning System) in the US, Galileo of the European Union, Russian GLONASS, Chinese Beidou (or COMPASS), and Indian IRNSS. The positioning radio receiver determines its location (meridian, latitude, height) by receiving time signals transmitted by visible satellites orbiting the earth. However, other known positioning technologies may also be used.

In the portable device 112, information comprised by the positioning data is displayed on the screen, for instance as a location on a map or a direction to the destination 100, if the portable device 112 is provided with a positioning system (such as a receiver of the GPS or some other satellite navigation system).

In an example embodiment, the received radio signal 130A and the retransmitted radio signal 132A, 132B, 132C comprise the positioning data indicating the geographical location of the animal 100. Positioning data refers to information provided by the tracking device 102, for instance: the geographical location, speed and height of the tracking device 102, and satellite system information, such as satellites used in the positioning, telemetric information on the tracking device 102, such as the battery charge level, temperature, and/or measured data obtained from monitoring the animal 100 functions, such as barking frequency, immobility, hunting the prey, and information derived therefrom.

In an example embodiment, the radio repeater 122 is implemented in at least one of the following: a fixedly placeable separate radio repeater device 122, a tracking device 102 to be attached to an animal 100, a portable device 112 for a hunter 110. Figure 1 shows fixedly placed, separate radio repeater devices 120, 122, 124, 126, 128. In addition/instead, the radio repeater 122 may also be placed in the source device 102, such as a tracking device, in which case the coverage area may move and it may deal with a type of peer-to-peer network formed by the source devices 102, 106. In addition/alternatively, the portable devices 112 may also form a radio repeater peer-to-peer network 190.

In an example embodiment, the radio repeater 122 operates in an environment described in another patent application FI 20116246 of the Applicant.

In an example embodiment, a frequency of 155 MHz determined for monitoring and tracking transmitters 102 is used, the highest allowable transmission power being 2 W (ERP) and the duty ratio being at most 10%. Depending on the terrain and transmission power, the operating range between the transmitter 102 and the receiver 112 is relatively modest. In practice, the operating range is about 1 to 5 km depending on the terrain, in the open terrain sometimes even over 10 km. However, the distance between dogs 100 chasing elks and their masters 110 may be tens of kilometres long. In hunting applications it does not matter if the information transmitted by the tracking device 102 arrives at the receiver 112 with a delay of a few seconds, compared to the situation where the receiver 112 is not within the coverage area at all.

In the example embodiment of Figure 1, the repeater network 190 comprises five radio repeaters 120, 122, 124, 126, 128 in different places in the hunting area. When a plurality of radio repeaters are in the same coverage area and forward the data packet they have received simultaneously at the same frequency, the portable device 112 or the radio repeater 120, 122, 124, 126, 128 in the repeater network 190 is not necessarily able to distinguish a proper transmission among the simultaneous transmissions and the system does not work. Therefore it is advantageous that the radio repeaters 120, 122, 124, 126, 128 perform the transmissions at different times. Furthermore, it is advantageous that the radio repeaters 120, 122, 124, 126, 128 identify the data packet already received or transmitted before, so that the radio repeaters 120, 122, 124, 126, 128 would not transmit the same packet back and forth to one another. Each radio repeater 120, 122, 124, 126, 128 of the repeater network 190 may be provided with a delay of a different length, and after the delay the received data packet will be forwarded if this data packet has not already been transmitted by the radio repeater in question. Data packets may be identified by a transmission identification of the tracking device 102, for instance, and delays may be determined in such a manner that more than one radio repeater 120, 122, 124, 126, 128 does not in any case transmit simultaneously, even if the data packet were transmitted to a plurality of radio repeaters 120, 122, 124, 126, 128 simultaneously.

For instance, when the above-mentioned frequency (155.400 MHz) is used, the duty ratio of the transmitter is limited to ten percent at most. If there was a chance that the duty ratio could be exceeded, the radio repeater 120, 122, 124, 126, 128 can increase its delay automatically. The duty ratio could be exceeded if, for example, a plurality of tracking devices 102, 106 accepted to the repeater network 190 arrived in the coverage area of the repeater network 190 and thus increased the radio traffic.

Frequencies used in an example embodiment are 154.900 to 155.475 MHz (0.575 MHz), 155.400, 155.425, 155.450, 155.475, 155.500 and 155.525 MHz, the radiation power being at most 2 W ERP, the channel width at most 25 kHz and the duty ratio at most 10%.

It will be apparent to a person skilled in the art that as technology advances, the basic idea of the invention may be implemented in many different ways. The invention and its embodiments are thus not restricted to the examples described above but may vary within the scope of the claims.

## Claims

1. A repeater network (190) comprising a plurality of radio repeaters (120, 122, 124, 126, 128), a radio repeater (122) comprising:
a radio receiver (202) for receiving a radio signal (130A);
a radio transmitter (204) for retransmitting the received radio signal (130A) as a retransmitted radio signal (132A, 132B, 132C); and
at least one processor (206) and at least one memory (208), in which at least one memory (208) a computer program code (248) is stored, which, when executed with the at least one processor (206), causes the radio repeater (122) to:
receive (302) a radio signal (130A, 134B, 136A, 140B) derived from a source device (102), either transmitted directly by the source device (102) or retransmitted by another radio repeater (120, 124, 128); and to
retransmit (304) the received radio signal (130A) as the retransmitted radio signal (132A, 132B, 132C) not more than once after a predetermined delay;
the radio repeater also comprises a computer program code (248) which, when executed with the at least one processor (206), causes the radio repeater (122) also to:
determine (312) the predetermined delay in such a manner that it is different for each radio repeater (120, 122, 124, 126, 128) belonging to the same repeater network (190), whereby none of the radio repeaters (120, 122, 124, 126, 128) retransmits with another repeater at the same moment, and whereby the retransmissions do not overlap, although each radio repeater (120, 122, 124, 126, 128) belonging to the same repeater network (190) repeats the received radio signal (130A, 130B, 132A, 132B, 134A, 134B, 134C, 136A, 136B, 138A, 138B, 138C, 140A, 140B, 140C) when it propagates via different routes in the repeater network (190); and
control the retransmission (304) by
reading (400) from the received radio signal (130A) a source device identification tagged thereto by the source device (102); and
if the source device identification read from the received radio signal (130A) is not found among either the stored source device identifications or the source device identifications (402 & 404) of the radio signals waiting to be retransmitted, retransmitting (406) the received radio signal (130A) as the retransmitted radio signal (132A, 132B, 132C) for the first time, and storing (408) the source device identification of the retransmitted radio signal (132A, 132B, 132C), or if the source device identification read from the received radio signal is found among either the stored source device identifications or the source device identifications (402 & 410) of the radio signals waiting to be retransmitted, not retransmitting (412) the received radio signal for the second time and not setting the received radio signal (130A) to wait for retransmission for the second time.

2. The repeater network of claim 1, wherein the radio repeater (122) also comprises a computer program code (248) which, when executed with at least one processor (206), causes the radio repeater (122) also to:
measure (308) the predetermined delay since the reception of the radio signal (130A).

3. The repeater network of claim 1 or 2, wherein the radio repeater (122) also comprises a computer program code (248) which, when executed with at least one processor (206), causes the radio repeater (122) also to:
control (310) the predetermined delay on the basis of at least one of the following: duration of the radio signal (130A, 132A, 132B, 132C), number of radio repeaters (120, 122, 124, 126, 128) in the repeater network (190), number of source devices (102, 106).

4. The repeater network of any preceding claim, wherein the radio repeater (122) also comprises a computer program code (248) which, when executed with at least one processor (206), causes the radio repeater (122) also to:
control (314) the predetermined delay in such a manner that, when more than one source device (102, 106) transmits a radio signal (108, 130A, 130B), the received radio signal (108, 130A) is retransmitted (304) as the retransmitted radio signal (114, 132A, 132B, 132C) not more than once so that a transmission duty ratio allowed for the radio repeater (122) is not exceeded.

5. The repeater network of claim 4, wherein the radio repeater (122) also comprises a computer program code (248) which, when executed with at least one processor (206), causes the radio repeater (122) also to:
retransmit (304) the radio signals (130A, 108) last received from each source device (102, 106) as the retransmitted radio signals (132A, 114) one after another, and then to keep a break in retransmission, which is so long that the transmission duty ratio allowed for the radio repeater (122) is not exceeded.

6. The repeater network of any preceding claim, wherein the source device identification comprises a source device identification part distinguishing the source devices (102, 106) from one another and a radio signal identification part distinguishing the radio signals of a specific source device from one another.

7. The repeater network of any preceding claim, wherein the radio repeater (122) also comprises a computer program code (248) which, when executed with at least one processor (206), causes the radio repeater (122) also to:
read (500) possible radio repeater identifications from the received radio signal (130A); and
if the received radio signal (130A) does not yet have a radio repeater identification (502 & 504) of the radio repeater (122) receiving the radio signal, to retransmit (506) the received radio signal (130A) as the retransmitted radio signal (132A, 132B, 132C) for the first time, and to set to the radio signal (132A, 132B, 132C) to be retransmitted a radio repeater identification identifying the radio repeater (122), or if the received radio signal already has a radio repeater identification (502 & 510) of the radio repeater (122) receiving the radio signal, not to retransmit (512) the received radio signal for the second time.

8. The repeater network of any preceding claim, wherein the radio repeater (122) also comprises a computer program code (248) which, when executed with at least one processor (206), causes the radio repeater (122) also to:
read (600) from the received radio signal (130A) a source device identification tagged thereto by the source device (102); and
if the read source device identification is found among allowable source device identifications (602 & 608), to retransmit (610) the received radio signal (130A) as the retransmitted radio signal (132A, 132B, 132C) not more than once after the predetermined delay, or if the read source device identification is not found among allowable source device identifications (602 & 604), not to retransmit (606) the received radio signal (130A).

9. The repeater network of any preceding claim, wherein the radio repeater (122) also comprises a computer program code (248) which, when executed with at least one processor (206), causes the radio repeater (122) also to:
receive and store configuration data (244) of the radio repeater (122) by either the radio receiver (202) or a short-range radio transceiver (216) comprised by the radio repeater (122), the configuration data (244) comprising at least one of the following:
the predetermined delay for the radio repeater (122);
a radio repeater identification identifying the radio repeater (122);
allowable source device identifications (102, 106).

10. The repeater network of any preceding claim, wherein the radio repeater (122) also comprises a computer program code (248) which, when executed with at least one processor (206), causes the radio repeater (122),
if the radio signals (108, 130A) have been received from more than one source device (102, 106), also to combine (316) the different radio signals (108, 130A) into one radio signal to be retransmitted or to transmit the different radio signals one after another after the predetermined delay.

11. The repeater network of any preceding claim, wherein the radio repeater (122) also comprises a computer program code (248) which, when executed with at least one processor (206), causes the radio repeater (122) also to:
receive (302) the radio signal (130A) and to retransmit (304) the retransmitted radio signal by using the same radio channel for both signals.

12. The repeater network of any preceding claim, wherein the predetermined delays are selected for the radio repeaters (120, 122, 124, 126, 128) of the same repeater network (190) in such a manner that the combined duration time of delays and radio signals is shorter than the transmission interval of the source device (102), whereby retransmission of the radio signal ends before the next radio signal is transmitted from the source device (102).

13. The repeater network of any preceding claim, wherein the radio repeater (122) comprises at least one of the following:
an accumulator (212), in which electric power required by the radio repeater (122) is stored;
a solar cell (214) generating electric power required by the radio repeater (122);
a fastener (210), by which the radio repeater (122) can be fastened to a high point in the terrain;
a casing protecting the radio repeater (122) against humidity.

14. The repeater network of any preceding claim, wherein the source device comprises at least one of the following: a tracking device (102) to be attached to an animal (100), a portable device (112) for a hunter (110).

15. The repeater network of any preceding claim, wherein the received radio signal (130A) and the retransmitted radio signal (132A, 132B, 132C) comprise positioning data indicating the geographical location of the animal (100).

16. The repeater network of any preceding claim, wherein the radio repeater (122) is implemented in at least one of the following:
a fixedly placeable separate radio repeater device (122);
a tracking device (102) to be attached to an animal (100);
a portable device (112) for a hunter (110).

17. A computer program code as claimed in any one of the preceding claims 1 to 16 stored on a computer-readable storage medium, the computer program code, when executed in an apparatus, causes the apparatus to operate according to any of the preceding claims 1 to 16.

## Patentansprüche

1. Repeater-Netzwerk (190) mit mehreren Funk-Repeatern (120, 122, 124, 126, 128), wobei ein Funk-Repeater (122) aufweist:
einen Funk-Empfänger (202) zum Empfangen eines Funksignals (130A);
einen Funk-Sender (204) zum erneuten Senden des empfangenen Funksignals (130A) als ein erneut gesendetes Funksignal (132A, 132B, 132C); und
mindestens einen Prozessor (206) und mindestens einen Speicher (208), in welchem ein Computerprogrammcode (248) gespeichert ist, der, bei Ausführung in dem mindestens einen Prozessor (206) bewirkt, dass der Funk-Repeater (122):
ein Funksignal (130A, 134B, 136A, 140B) empfängt, das aus einer Ursprungseinrichtung (102), entweder durch direktes Senden von der Ursprungseinrichtung (102) oder durch erneutes Senden von einem weiteren Funk-Repeater (120, 124, 128) empfangen wird (302); und
das empfangene Funksignal (130A) als das erneut gesendete Funksignal (132A, 132B, 132C) nicht öfter als einmal nach einer vorbestimmten Verzögerung erneut sendet (304);
wobei der Funk-Repeater ferner einen Computerprogrammcode (248) aufweist, der bei Ausführung in dem mindestens einen Prozessor (206) bewirkt, dass der Funk-Repeater (122) ferner:
die vorbestimmte Verzögerung derart bestimmt (312), dass sie für jeden Funk-Repeater (120, 122, 124, 126, 128), der zu dem gleichen Repeater-Netzwerk (190) gehört, unterschiedlich ist, wodurch keiner der Funk-Repeater (120, 122, 124, 126, 128) gleichzeitig zusammen mit einem weiteren Repeater sendet, und wodurch die erneuten Sendevorgänge nicht überlappen, obwohl jeder Funk-Repeater (120, 122, 124, 126, 128), der zu dem gleichen Repeater-Netzwerk (190) gehört, das empfangene Funksignal (130A, 130B, 132A, 132B, 134A, 134B, 134C, 136A, 136B, 138A, 138B, 138C, 140A, 140B, 140C) wiederholt sendet, wenn es über unterschiedliche Routen in dem Repeater-Netzwerk (190) verteilt wird; und
das erneute Senden (304) steuert durch
Auslesen (400), aus dem empfangenen Funksignal (130A), einer Ursprungseinrichtungskennung, die an dem Funksignal durch die Ursprungseinrichtung (102) angehängt ist; und
wenn die Ursprungseinrichtungskennung, die aus dem empfangenen Funksignal (130A) ausgelesen wird, nicht unter den gespeicherten Ursprungseinrichtungskennungen oder den Ursprungseinrichtungskennungen (402 und 404) der Funksignale, die auf ein erneutes Senden warten, gefunden wird, erstmaliges erneutes Senden (406) des empfangenen Funksignals (130A) als das neu gesendete Funksignal (132A, 122B, 132C), und Speichern (408) der Ursprungseinrichtungskennung des erneut gesendeten Signals (132A, 132B, 132C), oder
wenn die aus dem empfangenen Funksignal ausgelesene Ursprungseinrichtungskennung unter den gespeicherten Ursprungseinrichtungskennungen oder den Ursprungseinrichtungskennungen (402 und 410) der Funksignale, die auf das erneute Senden warten, gefunden wird, ein erneutes Senden (412) des empfangenen Funksignals das zweite Mal nicht erfolgt, und nicht Festlegen, dass das empfangene Funksignal (130A) ein zweites Mal auf ein erneutes Senden wartet.

2. Repeater-Netzwerk nach Anspruch 1, wobei der Funk-Repeater (122) ferner einen Computerprogrammcode (248) enthält, der bei Ausführung in mindestens einem Prozessor (206) bewirkt, dass der Funk-Repeater (122) ferner:
die vorbestimmte Verzögerung seit dem Empfang des Funksignals (130A) misst (308).

3. Repeater-Netzwerk nach Anspruch 1 oder 2, wobei der Funk-Repeater (122) ferner einen Computerprogrammcode (248) enthält, der bei Ausführung in mindestens einem Prozessor (206) bewirkt, dass der Funk-Repeater (122) ferner:
die vorbestimmte Verzögerung auf der Grundlage des folgenden steuert (310): einer Dauer des Funksignals (130A, 132A, 132B, 132C) und/oder einer Anzahl an Funk-Repeatern (120, 122, 124, 126, 128) in dem Repeater-Netzwerk (190) und/oder einer Anzahl an Ursprungseinrichtungen (102, 106).

4. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122) ferner:
die vorbestimmte Verzögerung derart steuert (314), dass, wenn mehr als eine Ursprungseinrichtung (102, 106) ein Funksignal (108, 130A, 130B) sendet, das empfangene Funksignal (108, 130A)als das erneut gesendete Funksignal (114, 132A, 132B, 132C) nicht mehr als einmal erneut gesendet wird (304), sodass ein Übertragungsgradverhältnis, das für den Funk-Repeater (122) zulässig ist, nicht überschritten wird.

5. Repeater-Netzwerk nach Anspruch 4, wobei der Funk-Repeater (122) ferner einen Computerprogrammcode (248) aufweist, der bei Ausführung in mindestens einem Prozessor (206) bewirkt, dass der Funk-Repeater (122) ferner:
die Funksignale (130A, 108), die als letztes aus jeder Ursprungseinrichtung (102, 106) empfangen werden, als die erneut gesendeten Funksignale (132A, 114) nacheinander erneut sendet (304), und dann eine Pause für das erneute Senden einlegt, die so lang ist, dass das Übertragungsgradverhältnis, das für den Funk-Repeater (122) zulässig ist, nicht überschritten wird.

6. Repeater-Netzwerk nach einem der vorhergehenden Ansprüche, wobei die Ursprungseinrichtungskennung einen Ursprungseinrichtungskennungsteil, der die Ursprungseinrichtungen (102, 106) voneinander unterscheidet, und einen Funksignalkennungsteil enthält, der die Funksignale jeweiliger Ursprungseinrichtungen voneinander unterscheidet.

7. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122) ferner:
mögliche Funk-Repeater-Kennungen aus dem empfangenen Funksignal (130A) ausliest (500); und
wenn das empfangene Funksignal (130A) noch keine Funk-Repeater-Kennung (502 und 504) des Funk-Repeaters (122) hat, der das Funksignal empfängt, das empfangene Funksignal (130A) das erste Mal als das erneut gesendete Funksignal (132A, 132B, 122C) erneut sendet (506), und dem erneut zu sendenden Funksignal (132A, 132B, 132C) eine Funk-Repeater-Kennung hinzufügt, die den Funk-Repeater (122) kennzeichnet, oder, wenn das empfangene Funksignal bereits eine Funk-Repeater-Kennung (502 und 510) des Funk-Repeaters (122) hat, der das Funksignal empfängt, das empfangene Funksignal nicht das zweite Mal erneut sendet (512).

8. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122) ferner:
aus dem empfangenen Funksignal (130A) eine Ursprungseinrichtungskennung, die durch die Ursprungseinrichtung (102) hinzugefügt ist, ausliest (600); und
wenn die ausgelesene Ursprungseinrichtungskennung aus zulässigen Ursprungseinrichtungskennungen (602 und 608) gefunden wird, das empfangene Funksignal (130A) als das erneut gesendete Funksignal (132A, 132B, 132C) nicht mehr als einmal nach der vorbestimmten Verzögerung erneut sendet (610), oder, wenn die ausgelesene Ursprungseinrichtungskennung nicht unter den zulässigen Ursprungseinrichtungskennungen (602 und 604) gefunden wird, das empfangene Funksignal (130A) nicht erneut sendet (606).

9. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122) ferner:
Konfigurationsdaten (244) des Funk-Repeaters (122) mittels des Funkempfängers (202) oder mittels eines Funk-Sender/Empfängers mit kurzer Reichweite (216), der durch den Funk-Repeater (122) gebildet ist, empfängt und speichert, wobei die Konfigurationsdaten (244) enthalten:
die vorbestimmte Verzögerung für den Funk-Repeater (122); und/oder
eine Funk-Repeater-Kennung, die den Funk-Repeater (122) kennzeichnet; und/oder
zulässige Ursprungseinrichtungskennungen (102, 106).

10. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122):
wenn die Funksignale (108, 130A) von mehr als einer Ursprungseinrichtung (102, 106) empfangen worden sind, die unterschiedlichen Funksignale (108, 130A) zu einem einzelnen Funksignal kombiniert (316), das erneut zu senden ist, oder die unterschiedlichen Funksignale nacheinander nach der vorbestimmten Verzögerung sendet.

11. Repeater-Netzwerk nach einem der vorhergehenden Ansprüche, wobei der Funk-Repeater (122) ferner einen Computerprogrammcode (248) aufweist, der bei Ausführung in mindestens einem Prozessor (206) bewirkt, dass der Funk-Repeater (122) ferner:
das Funksignal (130A) empfängt (302) und das erneut gesendete Funksignal erneut sendet (304), wobei der gleiche Funkkanal für beide Signale verwendet wird.

12. Repeater-Netzwerk nach einem der vorhergehenden Ansprüche, wobei die vorbestimmten Verzögerungen für die Funk-Repeater (120, 122, 124, 126, 128) des gleichen Repeater-Netzwerks (190) so ausgewählt sind, dass die kombinierte Zeitdauer von Verzögerungen und Funksignalen kürzer ist als das Sendeintervall der Ursprungseinrichtung (102), wodurch eine erneute Sendung des Funksignals zu Ende ist, bevor das nächste Funksignal von der Ursprungseinrichtung (102) gesendet wird.

13. Repeater-Netzwerk nach einem der vorhergehenden Ansprüche, wobei der Funk-Repeater (122) aufweist:
einen Akkumulator (212), in welchem die für den Funk-Repeater (122) erforderliche elektrische Energie gespeichert ist; und/oder
eine Solarzelle (214), die eine für den Funk-Repeater (122) erforderliche elektrische Leistung erzeugt; und/oder
ein Befestigungsmittel (210), durch welches der Funk-Repeater (122) an einem hohen Punkt im Gelände befestigt werden kann; und/oder
ein Gehäuse, das den Funk-Repeater (122) vor Feuchtigkeit geschützt.

14. Repeater-Netzwerk nach einem der vorhergehenden Ansprüche, wobei die Ursprungseinrichtung aufweist: eine Überwachungseinrichtung (102), die an einem Tier (100) anzubringen ist, und/oder eine tragbare Einrichtung (112) für einen Jäger (110).

15. Repeater-Netzwerk nach einem der vorhergehenden Ansprüche, wobei das empfangene Funksignal (130A) und das erneut gesendete Funksignal (132A, 132B, 132C) Positionsdaten enthalten, die die geographische Position des Tieres (100) kennzeichnen.

16. Repeater-Netzwerk nach einem der vorhergehenden Ansprüche, wobei der Funk-Repeater (122) implementiert ist in:
einer stationär anbringbar unabhängigen Funk-Repeater-Einrichtung (122); und/oder
einer Überwachungseinrichtung (102), die an einem Tier (100) anzubringen ist; und/oder
einer tragbaren Einrichtung (112) für einen Jäger (110).

17. Computerprogrammcode nach einem der vorhergehenden Ansprüche 1 bis 16, der in einem computerlesbaren Speichermedium gespeichert ist, wobei der Computerprogrammcode bei Ausführung in einer Vorrichtung bewirkt, dass die Vorrichtung für eine Funktion gemäß einem der vorhergehenden Ansprüche 1 bis 16 ausgebildet ist.

## Revendications

1. Réseau de répéteurs (190) comprenant une pluralité de répéteurs radio (120, 122, 124, 126, 128), un répéteur radio (122) comprenant :
un récepteur radio (202) pour une réception d'un signal radio (130A) ;
un émetteur radio (204) pour une retransmission du signal radio reçu (130A) en tant qu'un signal radio retransmis (132A, 132B, 132C) ; et
au moins un processeur (206) et au moins une mémoire (208), dans laquelle au moins une mémoire (208) un code de programme informatique (248) est stocké, qui, lorsqu'exécuté avec l'au moins un processeur (206), amène le répéteur radio (122) à :
recevoir (302) un signal radio (130A, 134B, 136A, 140B) issu d'un dispositif source (102), soit transmis directement par le dispositif source (102), soit retransmis par un autre répéteur radio (120, 124, 128) ; et à
retransmettre (304) le signal radio reçu (130A) en tant que le signal radio retransmis (132A, 132B, 132C) pas plus d'une fois après un délai prédéterminé ;
le répéteur radio comprend en outre un code de programme informatique (248) qui, lorsqu'exécuté avec l'au moins un processeur (206), amène le répéteur radio (122) également à :
déterminer (312) le délai prédéterminé de telle manière qu'il soit différent pour chaque répéteur radio (120, 122, 124, 126, 128) appartenant au même réseau de répéteurs (190), de sorte qu'aucun des répéteurs radio (120, 122, 124, 126, 128) ne retransmette au même moment qu'un autre répéteur, et de sorte que les retransmissions ne se chevauchent pas, bien que chaque répéteur radio (120, 122, 124, 126, 128) appartenant au même réseau de répéteurs (190) répète le signal radio reçu (130A, 130B, 132A, 132B, 134A, 134B, 134C, 136A, 136B, 138A, 138B, 138C, 140A, 140B, 140C) lorsqu'il se propage via différentes voies dans le réseau de répéteurs (190) ; et
contrôler la retransmission (304) en lisant (400) à partir du signal radio reçu (130A) une identification d'un dispositif source marquée dans celui-ci par le dispositif source (102) ; et
si l'identification de dispositif source lue à partir du signal radio reçu (130A) n'est pas trouvée parmi soit les identifications de dispositif source stockées, soit les identifications de dispositif source (402 & 404) des signaux radio en attente de retransmission, retransmission (406) du signal radio reçu (130A) en tant que le signal radio retransmis (132A, 132B, 132C) pour la première fois, et stockage (408) de l'identification de dispositif source du signal radio retransmis (132A, 132B, 132C), ou si l'identification de dispositif source lue à partir du signal radio reçu n'est pas trouvée parmi soit les identifications de dispositif source stockées, soit les identifications de dispositif source (402 & 410) des signaux radio en attente de retransmission,
non-retransmission (412) du signal radio reçu pour la deuxième fois et non-définition du signal radio reçu (130A) pour attendre une retransmission pour la deuxième fois.

2. Le réseau de répéteurs de la revendication 1, dans lequel le répéteur radio (122) comprend en outre un code de programme informatique (248) qui, lorsqu'exécuté avec au moins un processeur (206), amène le répéteur radio (122) également à :
mesurer (308) le délai prédéterminé depuis la réception du signal radio (130A).

3. Le réseau de répéteurs de la revendication 1 ou 2, dans lequel le répéteur radio (122) comprend en outre un code de programme informatique (248) qui, lorsqu'exécuté avec au moins un processeur (206), amène le répéteur radio (122) également à :
contrôler (310) le délai prédéterminé en s'appuyant sur au moins un des suivants : durée du signal radio (130A, 132A, 132B, 132C), nombre de répéteurs radio (120, 122, 124, 126, 128) dans le réseau de répéteurs (190), nombre de dispositifs source (102, 106).

4. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122) également à :
contrôler (314) le délai prédéterminé de telle manière que, lorsque plus d'un dispositif source (102, 106) transmettent un signal radio (108, 130A, 130B), le signal radio reçu (108, 130A) est retransmis (304) en tant que le signal radio retransmis (114, 132A, 132B, 132C) pas plus d'une fois de sorte qu'un taux d'utilisation en transmission autorisé pour le répéteur radio (122) n'est pas dépassé.

5. Le réseau de répéteurs de la revendication 4, dans lequel le répéteur radio (122) comprend en outre un code de programme informatique (248) qui, lorsqu'exécuté avec au moins un processeur (206), amène le répéteur radio (122) également à :
retransmettre (304) les signaux radio (130A, 108) reçus en dernier de chaque dispositif source (102, 106) en tant que les signaux radio retransmis (132A, 114) l'un après l'autre, puis maintenir une pause dans la retransmission, qui est suffisamment longue pour que le taux d'utilisation en transmission autorisé pour le répéteur radio (122) ne soit pas dépassé.

6. Le réseau de répéteurs de l'une quelconque des revendications précédentes, dans lequel l'identification de dispositif source comprend un élément d'identification de dispositif source distinguant les dispositifs source (102, 106) l'un de l'autre et un élément d'identification de signal radio distinguant les signaux radio d'un dispositif source spécifique de ceux d'un autre.

7. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122) également à :
lire (500) des identifications de répéteurs radio potentielles à partir du signal radio reçu (130A) ; et
si le signal radio reçu (130A) ne dispose pas encore d'une identification de répéteur radio (502 & 504) du répéteur radio (122) recevant le signal radio, retransmettre (506) le signal radio reçu (130A) en tant que le signal radio retransmis (132A, 132B, 132C) pour la première fois, et définir pour le signal radio (132A, 132B, 132C) à retransmettre une identification de répéteur radio identifiant le répéteur radio (122), ou si le signal radio reçu dispose déjà d'une identification de répéteur radio (502 & 510) du répéteur radio (122) recevant le signal radio, ne pas retransmettre (512) le signal radio reçu pour la deuxième fois.

8. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122) également à :
lire (600) à partir du signal radio reçu (130A) une identification d'un dispositif source marquée dans celui-ci par le dispositif source (102) ; et
si l'identification de dispositif source lue est présente parmi des identifications de dispositif source acceptables (602 & 608), retransmettre (610) le signal radio reçu (130A) en tant que le signal radio retransmis (132A, 132B, 132C) pas plus d'une fois après le délai prédéterminé, ou si l'identification de dispositif source lue n'est pas présente parmi des identifications de dispositif source acceptables (602 & 604), ne pas retransmettre (606) le signal radio reçu (130A).

9. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122) également à :
recevoir et stocker des données de configuration (244) du répéteur radio (122) par soit le récepteur radio (202), soit un émetteur-récepteur radio à courte portée (216) intégré au répéteur radio (122), les données de configuration (244) comprenant au moins un des suivants :
le délai prédéterminé pour le répéteur radio (122) ;
une identification de répéteur radio identifiant le répéteur radio (122) ;
des identifications de dispositif source acceptables (102, 106).

10. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122)
si les signaux radio (108, 130A) ont été reçus de plus d'un dispositif source (102, 106), en outre à combiner (316) les différents signaux radio (108, 130A) en un signal radio à retransmettre ou à transmettre les différents signaux radio l'un après l'autre après le délai prédéterminé.

11. Le réseau de répéteurs de l'une quelconque des revendications précédentes, dans lequel le répéteur radio (122) comprend en outre un code de programme informatique (248) qui, lorsqu'exécuté avec au moins un processeur (206), amène le répéteur radio (122) également à :
recevoir (302) le signal radio (130A) et retransmettre (304) le signal radio retransmis en utilisant le même canal radio pour les deux signaux.

12. Le réseau de répéteurs de l'une quelconque des revendications précédentes dans lequel les délais prédéterminés sont sélectionnés pour les répéteurs radio (120, 122, 124, 126, 128) du même réseau de répéteurs (190) de telle manière que la durée combinée des délais et signaux radio est plus courte que l'intervalle de transmission du dispositif source (102), de sorte qu'une retransmission du signal radio se termine avant que le signal radio suivant soit transmis à partir du dispositif source (102).

13. Le réseau de répéteurs de l'une quelconque des revendications précédentes, dans lequel le répéteur radio (122) comprend au moins un des suivants :
un accumulateur (212), dans lequel une puissance électrique requise par le répéteur radio (122) est stockée ;
une cellule solaire (214) générant une puissance électrique requise par le répéteur radio (122) ;
une fixation (210), par laquelle le répéteur radio (122) peut être fixé à un point haut du terrain ;
un boîtier protégeant le répéteur radio (122) de l'humidité.

14. Le réseau de répéteurs radio de l'une quelconque des revendications précédentes, dans lequel le dispositif source comprend au moins un des suivants : un dispositif de pistage (102) à attacher à un animal (100), un dispositif portable (112) pour un chasseur (110).

15. Le réseau de répéteurs de l'une quelconque des revendications précédentes, dans lequel le signal radio reçu (130A) et le signal radio retransmis (132A, 132B, 132C) comprennent des données de positionnement indiquant la position géographique de l'animal (100).

16. Le réseau de répéteurs de l'une quelconque des revendications précédentes, dans lequel le répéteur radio (122) est mis en oeuvre dans au moins un des suivants :
un dispositif de répéteur radio séparé installable en position fixe (122) ;
un dispositif de pistage (102) à attacher à un animal (100) ;
un dispositif portable (112) pour un chasseur (110).

17. Un code de programme informatique tel que revendiqué à l'une quelconque des revendications précédentes 1 à 16 stocké sur un support de stockage lisible par un ordinateur, le code de programme informatique, lorsqu'exécuté dans un appareil, fait fonctionner l'appareil conformément à l'une quelconque des revendications précédentes 1 à 16.
